# EUROPÄISCHE PATENTSCHRIFT

(11) **EP 3 057 779 B1**
(45) Veröffentlichungstag und Bekanntmachung des Hinweises auf die Patenterteilung: **30.09.2020**
(21) Anmeldenummer: 14783801.5
(22) Anmeldetag: 09.10.2014
(51) Int. Cl.: B29C 70/86, B29C 70/02, B29C 70/22, D04C 1/00, D04C 1/02, B29C 70/48, D04C 3/48, B29L 31/30

(54) **VERFAHREN ZUM HERSTELLEN EINES VERSTÄRKTEN FASERVERBUNDBAUTEILS**
METHOD FOR PRODUCING A REINFORCED FIBER COMPOSITE COMPONENT
PROCÉDÉ DE PRODUCTION D'UN ÉLÉMENT STRUCTURAL COMPOSITE RENFORCÉ PAR DES FIBRES

(30) Priorität: 18.10.2013 DE 102013221172
(43) Veröffentlichungstag der Anmeldung: 24.08.2016
(73) Patentinhaber: Bayerische Motoren Werke Aktiengesellschaft, 80809 München (DE)
(72) Erfinder: BEIL, Andreas, 80935 München (DE); SCHNAUFER, Thomas, 82386 Oberhausen (DE); SPITZER, Simon, 80339 München (DE)
(86) Internationale Anmeldenummer: PCT/EP2014/071604
(87) Internationale Veröffentlichungsnummer: WO 2015/055487

(56) Entgegenhaltungen:
- EP-A1- 2 465 665
- DE-A1- 10 158 627
- FR-A1- 2 890 591
- FR-A1- 2 964 339
- US-A1- 2010 083 815

## Beschreibung

Die Erfindung betrifft ein Verfahren zum Herstellen eines verstärkten Faserverbundbauteils sowie ein verstärktes Faserverbundbauteil.

Faserverbundbauteile finden zunehmende Verwendung in Kraftfahrzeugen, da sie eine hohe Steifigkeit bei gleichzeitig geringem Gewicht im Vergleich zu entsprechenden Bauteilen aus rein metallischem Werkstoff aufweisen.

Um eine besonders hohe Formstabilität und gleichzeitig ein sehr geringes Gewicht zu erzielen, sind Faserverbundbauteile bekannt, die einen Stützkern umfassen, der mit einer Faserstruktur aus Kohle- oder Glasfasern durch Umwickeln oder Umflechten ummantelt ist. Es wird auf diese Weise eine hohlprofilförmige Faserstruktur bereitgestellt, deren Formstabilität durch den innerhalb des gebildeten Hohlprofils angeordneten Stützkern gestützt und somit gefestigt wird. Unter anderem finden Stützkerne aus Kunststoffschaum, Wachs, Holz, oder aus Metall Anwendung.

Derartige Bauteile weisen jedoch aufgrund der tragenden Faserstruktur aus Kohle- und/oder Glasfasern keine duktilen Werkstoffeigenschaften bzw. eine geringe Bruchdehnung auf. Bei einer Verformung des Bauteils führt dies zu einer geringen Strukturintegrität. Bei großen Verformungsgraden besteht daher die Gefahr eines Reißens der Faserstruktur und damit eines Durchbrechens des gesamten Faserverbundbauteils.

Aus der DE 10 2004 017 311 A1 ist beispielsweise ein mögliches Verfahren zum Herstellen eines Faserverbundhalbzeugs bekannt, bei dem ein Flechtkern mit Flechtfäden beflochten wird.

Des Weiteren sind auch aus der DE 101 58 627 A1 und der FR 2 890 591 A1 verstärkte Faserverbundbauteile bekannt.

Aufgabe der Erfindung ist es, ein besonders stabiles und durchbruchsicheres Faserverbundbauteil mit gleichzeitig möglichst geringem Gewicht vorzusehen.

Diese Aufgabe wird gelöst mittels eines Verfahrens gemäß Patentanspruch 1 sowie mit einem Faserverbundbauteil mit den Merkmalen des Patentanspruchs 6. Vorteilhafte Ausführungsformen ergeben sich aus den jeweils abhängigen Ansprüchen.

Demnach wird ein Verfahren zum Herstellen eines verstärkten Faserverbundbauteils mit den folgenden Schritten vorgeschlagen:
a. Bereitstellen eines Verstärkungsprofils,
b. Umschließen des Verstärkungsprofils mit einem Kernelement,
c. Erzeugen einer Ummantelung des Kernelements mittels Umflechten mit Endlosfasern,
d. Imprägnieren des umflochtenen Kernelements mit einer Matrix, wobei der Schritt des Umschließens des Verstärkungsprofils ein Umschäumen zum Erzeugen des umschließenden Kernelements umfasst.

Es wird also zunächst ein Verstärkungsprofil vorgesehen und dieses mit einem Kernelement umschlossen. Dies bedeutet, dass das Kernelement beispielsweise auf einer äußeren Oberfläche des Verstärkungsprofils aufgebracht wird und somit das Verstärkungsprofil zumindest in einer Umfangsrichtung des Verstärkungsprofils umschließt.

Es wird dadurch erreicht, dass das Kernelement durch das Verstärkungsprofil verstärkt und je nach Materialwahl eine Veränderung der Materialeigenschaften des gesamten Faserverbundbauteils bewirkt wird, so dass ein Durchbrechen bei hohen Belastungen verhindert wird.

Beispielsweise kann das Verstärkungsprofil ein stab- oder rohrförmiges Profil aus Kunststoff und/oder Metall und/oder faserverstärktem Material, insbesondere faserverstärktem Kunststoff oder faserverstärktem Metall, umfassen.

Grundsätzlich kann das Profil eine beliebige Querschnittsform aufweisen, die in einer Längsrichtung des Profils erstreckt ist. Einfachstes Beispiel hierfür ist ein kreisrunder Querschnitt, der zu einem Hohlzylinder bzw. rohrförmig in Längsrichtung erstreckt ist. Es versteht sich, dass ebenso andere Querschnittsformen gewählt werden können, insbesondere sind Ovale oder mehreckige Querschnitte einsetzbar. In jedem Fall kann das Verstärkungsprofil als Hohlprofil (zum Beispiels rohrförmig) oder als massives Profil aus Vollmaterial (zum Beispiel stabförmig) ausgeführt sein.

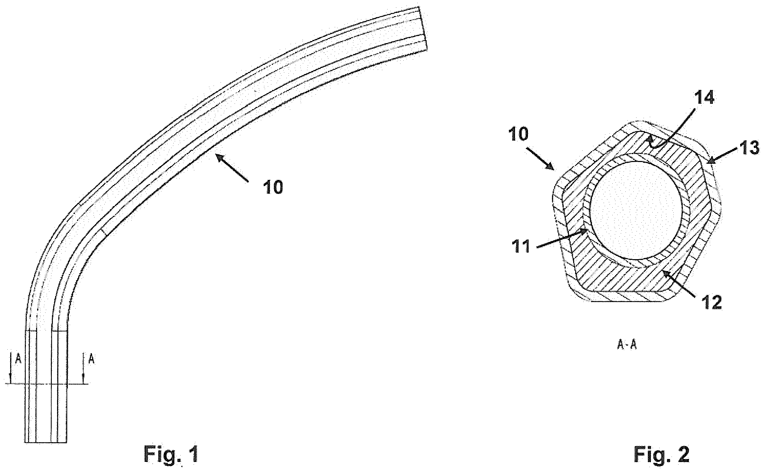

Der Aufbau des Faserverbundbauteils ermöglicht den Querschnitt des Verstärkungsprofils unabhängig von einer Geometrie der Ummantelung bzw. der äußeren Kontur des Faserverbundbauteils auszuführen. Beispielsweise kann der Querschnitt des Verstärkungsprofils Gewichts-, Last- und/oder Kraftoptimiert ausgeführt werden. Auch ist es möglich die Querschnittsform entlang einer Längserstreckung des Verstärkungsprofils konstant oder variierend auszugestalten. Zwar kann das Kernelement auf der äußeren Oberfläche des Verstärkungsprofils aufgebracht sein und dessen äußerer Kontur folgen, doch kann eine äußere Oberfläche bzw. Kontur des Kernelements eine von dem Verstärkungsprofil abweichende Querschnittsform aufweisen. Diese kann sich beispielsweise an einer Kontur des gesamten Faserverbundbauteils orientieren, so dass nach dem Erzeugen der Ummantelung bzw. dem Imprägnieren die gewünschte Bauteilkontur bereitgestellt wird. Mit anderen Worten dargestellt, überbrückt das Kernelement somit einen eventuellen Geometriesprung bzw. Geometrieunterschied zwischen dem Verstärkungsteil und der Ummantelung bzw. der Bauteilkontur. Eine beispielhafte Ausführungsform ist in Fig. 2 dargestellt.

Der Schritt des Imprägnierens kann insbesondere ein Imprägnieren mittels des Resin-Transfer-Moulding-Verfahrens (kurz: RTM) umfassen. Ebenso ist es möglich, den Schritt des Imprägnierens mittels anderer bekannter Imprägnierverfahren durchzuführen. Allgemein sind geeignete Imprägnierverfahren bereits bekannt, so dass auf deren ausführliche Beschreibung verzichtet werden kann.

Dagegen kann die Ummantelung beispielsweise Endlosfasern aus Glasfasern, Aramidfasern und/oder Kohlefasern umfassen. Die Ummantelung ist als Faserstruktur zu verstehen, die insbesondere durch Umflechten erzeugt und mit einer Matrix imprägniert wird. Hierbei können die Materialien der Endlosfasern beliebig mit unterschiedlichen Materialien des Kernelements kombiniert werden.

Für die Auswahl des Kernelements ist eine geeignete Verbindbarkeit einerseits mit dem Verstärkungsprofil, sowie andererseits mit der Ummantelung entscheidend. Zusätzlich sollte das Kernelement vorzugsweise eine ausreichende Druckstabilität aufweisen, um beispielsweise einer Injektion von Matrix während des Schrittes des Imprägnierens standzuhalten.

Hierzu kann das Kernelement als Schaumelement aus Metall- oder Kunststoffschaum ausgestaltet sein.

Als Matrix eignen sich insbesondere Kunststoffe oder Harze, welche durch den Schritt des Imprägnierens zumindest in die Faserstruktur der Ummantelung, oder zusätzlich - soweit möglich - in das Kernelement eingebracht und ausgehärtet werden. Auf diese Weise ist zumindest die imprägnierte Ummantelung aus faserverstärktem Kunststoff bzw. faserverstärktem Harz gebildet.

Gemäß der Erfindung ist der Schritt des Umschließens des Verstärkungsprofils ein Umschäumen zum Erzeugen des umschließenden Kernelements umfassen. Hierzu kann das Verstärkungsprofil in ein entsprechendes Schäumwerkzeug eingelegt werden.

Des Weiteren wird ein verstärktes Faserverbundbauteil mit einem Kernelement vorgeschlagen, das mit einer Ummantelung umflochten ist, wobei das Kernelement ein innerhalb des Kernelements angeordnetes Verstärkungsprofil umschließt.

Vorzugsweise ist das Faserverbundbauteil mit einem Verfahren gemäß der Beschreibung hergestellt.

Gemäß einer Ausführungsform ist das Faserverbundbauteil ein faserverstärktes Karosseriestrukturbauteil oder ein Verstärkungsbauteil eines Kraftfahrzeugs. Zum Beispiel kann das Karosseriestrukturbauteil eine Karosseriesäule, insbesondere A-, B-, C- oder D-Säule, ein Spriegel, Schweller, Motorträger, Längsträger, Querträger, Seitenrahmen oder dergleichen sein. Ebenso kann das Faserverbundbauteil als ein Verstärkungsbauteil ausgeführt sein, das mit einem Karosseriestrukturbauteil verbindbar ist, wie beispielsweise eine Karosseriesäulen-Verstärkung, insbesondere eine A-, B- C- oder D-Säulen-Verstärkung, die zwischen einen äußeren und einen inneren Seitenrahmen eingesetzt wird.

Die Erfindung wird nachfolgend anhand eines Ausführungsbeispiels mit Bezugnahme auf die Figuren näher beschrieben. Es zeigen:
- Fig. 1: ein verstärktes Faserverbundbauteil gemäß der Beschreibung in einer Seitenansicht, und
- Fig. 2: einen Querschnitt des verstärkten Faserverbundbauteils aus Fig. 1.

In Fig. 1 ist ein verstärktes Faserverbundbauteil gezeigt, das in der dargestellten Ausführungsform beispielhaft als ein Verstärkungsbauteil für eine A-Säule eines Kraftfahrzeugs ausgestaltet ist. Dieses kann zwischen einen äußeren und einen inneren Seitenrahmen des Fahrzeugs eingesetzt werden.

Fig. 2 zeigt einen Querschnitt A-A des in Fig. 1 dargestellten Faserverbundbauteils 10 mit einem Kernelement 12, das mit einer Ummantelung 13 auf einer äußeren Oberfläche 14 des Kernelements 12 umflochten ist. Außerdem umschließt das Kernelement 12 ein innerhalb des Kernelements 12 angeordnetes Verstärkungsprofil 11.

Dank des in dem Faserverbundbauteil 10 integrierten Verstärkungsprofils 11, welches innerhalb des Kernelements 12 angeordnet bzw. eingeschlossen ist, werden die Bauteileigenschaften des gesamten Faserverbundbauteils 10 beeinflusst und die Festigkeit erhöht. So ist es beispielsweise möglich, das Verstärkungsprofil 11 als rohrförmiges Profil aus Metall oder Kunststoff oder einem faserverstärkten Material bereitzustellen und somit eine Festigkeit zu erhöhen, sowie eine zusätzliche duktile Eigenschaft des Faserverbundbauteils 10 zu fördern. Dies verhindert auch bei großen Verformungswegen ein vollständiges Durchreißen des Faserverbundbauteils 10.

In der dargestellten Ausführungsform ist das Verstärkungsprofil 11 als Hohlprofil ausgeführt, das eine hohe Steifigkeit bei gleichzeitig geringem Gewicht ermöglicht.

Das verstärkte Faserverbundbauteil 10 kann beispielsweise mit Hilfe eines Verfahrens hergestellt werden, bei dem zunächst das Verstärkungsprofil 11 bereitgestellt und beispielsweise in ein nicht dargestellt) eingelegt wird. Dort wird das Verstärkungsprofil 11 mit einem Schaummaterial zur Erzeugung des Kernelements 12 umschäumt so dass das Kernelement 12 das Verstärkungsprofil 11 umschließt. Als Materialien für das Kernelement 12 eigenen sich Schaummaterial aus Kunststoff oder Metall.

Anschließend wird das Kernelement 12 mit dem integrierten Verstärkungsprofil 11 aus dem Schäumwerkzeug entnommen und durch Umflechten mit Endlosfasern mit einer Ummantelung 13 umschlossen. Das auf diese Weise erstellte umflochtene Kernelement 12 (inklusive integriertem Verstärkungselement 11) kann nachfolgend zum Beispiel mittels des Resin-Transfer-Moulding-Verfahrens mit einer Matrix imprägniert werden.

## Patentansprüche

1. Verfahren zum Herstellen eines verstärkten Faserverbundbauteils (10) mit den folgenden Schritten:
a. Bereitstellen eines Verstärkungsprofils (11),
b. Umschließen des Verstärkungsprofils (11) mit einem Kernelement (12),
c. Erzeugen einer Ummantelung (13) des Kernelements (12) mittels Umflechten mit Endlosfasern,
d. Imprägnieren des umflochtenen Kernelements (12) mit einer Matrix, wobei der Schritt des Umschließens des Verstärkungsprofils (11) ein Umschäumen zum Erzeugen des umschließenden Kernelements (12) umfasst.

2. Verfahren nach Anspruch 1, wobei das Verstärkungsprofil (11) ein rohrförmiges Profil aus Kunststoff und/oder Metall und/oder faserverstärktem Material umfasst.

3. Verfahren nach Anspruch 1 oder 2, wobei die Ummantelung (13) Endlosfasern aus Glasfasern, Aramidfasern und/oder Kohlefasern umfasst.

4. Verfahren nach einem der Ansprüche 1 bis 3, wobei das Kernelement (12) als Schaumelement aus Metall- oder Kunststoffschaum ausgestaltet ist.

5. Verfahren nach einem der Ansprüche 1 bis 4, wobei der Schritt des Imprägnierens ein Imprägnieren mittels des Resin-Transfer-Moulding-Verfahrens umfasst.

6. Verstärktes Faserverbundbauteil mit einem Kernelement (12), **dadurch gekennzeichnet, dass** das Kernelement mit einer Ummantelung (13) umflochten ist, wobei das Kernelement (12) ein innerhalb des Kernelements (12) angeordnetes Verstärkungsprofil (11) umschließt, und wobei das Verstärkungsprofil zum Erzeugen des umschließenden Kernelements umschäumt ist.

7. Verstärktes Faserverbundbauteil nach Anspruch 6, **dadurch gekennzeichnet, dass** das Faserverbundbauteil (10) mit einem Verfahren nach einem der Ansprüche 1 bis 5 hergestellt ist.

8. Verstärktes Faserverbundbauteil nach Anspruch 6 oder 7, **dadurch gekennzeichnet, dass** das Faserverbundbauteil (10) ein faserverstärktes Karosseriestrukturbauteil oder ein Verstärkungsbauteil eines Kraftfahrzeugs ist.

## Claims

1. Method for producing a reinforced fibre composite component (10), having the following steps:
a. providing a reinforcing profile (11),
b. enclosing the reinforcing profile (11) with a core element (12),
c. creating a sheath (13) of the core element (12) by means of braiding around with endless fibres,
d. impregnating the braided-around core element (12) with a matrix, wherein the step of enclosing the reinforcing profile (11) comprises an encapsulation by foaming in order to create the enclosing core element (12).

2. Method according to Claim 1, wherein the reinforcing profile (11) comprises a tubular profile composed of plastic and/or metal and/or fibre-reinforced material.

3. Method according to Claim 1 or 2, wherein the sheath (13) comprises endless fibres composed of glass fibres, aramid fibres and/or carbon fibres.

4. Method according to one of Claims 1 to 3, wherein the core element (12) is configured as a foamed element composed of metal foam or plastics foam.

5. Method according to one of Claims 1 to 4, wherein the step of impregnating comprises an impregnation by means of the resin transfer moulding method.

6. Reinforced fibre composite component with a core element (12), **characterized in that** a sheath (13) is braided around the core element, wherein the core element (12) encloses a reinforcing profile (11) arranged within the core element (12), and wherein the reinforcing profile is encapsulated by foaming in order to create the enclosing core element.

7. Reinforced fibre composite component according to Claim 6, **characterized in that** the fibre composite component (10) is produced by a method according to one of Claims 1 to 5.

8. Reinforced fibre composite component according to Claim 6 or 7, **characterized in that** the fibre composite component (10) is a fibre-reinforced bodyshell structure component or a reinforcing component of a motor vehicle.

## Revendications

1. Procédé de fabrication d'un composant composite (10) renforcé par des fibres, ledit procédé comprenant les étapes suivantes :
a. fournir un profilé de renforcement (11),
b. gainer le profilé de renforcement (11) avec un élément central (12),
c. réaliser une enveloppe (13) de l'élément central (12) par tressage avec des fibres continues,
d. imprégner l'élément central tressé (12) avec une matrice, l'étape d'entourage du profilé de renforcement (11) comprenant un moussage destiné à produire l'élément central de gainage (12).

2. Procédé selon la revendication 1, le profilé de renforcement (11) comprenant un profilé tubulaire en matière synthétique et/ou métallique et/ou en matériau renforcé par des fibres.

3. Procédé selon la revendication 1 ou 2, l'enveloppe (13) comprenant des fibres continues en fibres de verre, en fibres d'aramide et/ou en fibres de carbone.

4. Procédé selon l'une des revendications 1 à 3, l'élément central (12) étant réalisé sous la forme d'un élément en mousse à partir d'une mousse de matière métallique ou synthétique.

5. Procédé selon l'une des revendications 1 à 4, l'étape d'imprégnation comprenant une imprégnation au moyen du procédé de moulage par transfert de résine.

6. Composant composite renforcé par des fibres comprenant un élément central (12), **caractérisé en ce que** l'élément central pourvu d'une enveloppe (13) est tressé, l'élément central (12) gainant un profil de renforcement (11) disposé à l'intérieur de l'élément central (12), et le profilé de renforcement étant enrobé de manière à produire l'élément central de gainage.

7. Composant composite renforcé par des fibres selon la revendication 6, **caractérisé en ce que** le composant composite (10) renforcé par des fibres est réalisé avec un procédé selon l'une des revendications 1 à 5.

8. Composant composite renforcé par des fibres selon la revendication 6 ou 7, **caractérisé en ce que** le composant composite (10) renforcé par des fibres est un élément structurel de carrosserie renforcé par des fibres ou un élément de renforcement d'un véhicule automobile.
